# EUROPÄISCHE PATENTSCHRIFT

(11) **EP 0 429 085 B1**
(45) Veröffentlichungstag und Bekanntmachung des Hinweises auf die Patenterteilung: **22.06.1994**
(21) Anmeldenummer: 90122375.0
(22) Anmeldetag: 23.11.1990
(51) Int. Cl.: B62D 33/06, B62D 49/00, B60R 13/08

(54) **Schallgedämmte Fahrzeugkabine für Traktoren**
Tractor cabin with sound reduction
Cabine de tracteur à isolation phonique

(30) Priorität: 24.11.1989 DE 3938958
(43) Veröffentlichungstag der Anmeldung: 29.05.1991
(73) Patentinhaber: SAME S.p.A., I-24047 Treviglio (Bergamo) (IT)
(72) Erfinder: Komp, Hermann-Josef, Dipl.-Ing., W-5000 Köln 80 (DE); Kramer, Peter, W-5210 Troisdorf-Spich (DE); Orth, Werner, W-5067 Kürten (DE); Ippen, Heiko, W-5000 Köln 90 (DE)
(74) Vertreter: Nau, Walter, Dipl.-Ing.

(56) Entgegenhaltungen:
- DE-A- 1 555 390
- GB-A- 378 453
- GB-A- 386 923
- GB-A- 2 041 848
- GB-A- 2 187 683
- NL-A- 7 700 276
- US-A- 3 429 728
- US-A- 4 055 230
- US-A- 4 126 202

## Beschreibung

Die Erfindung betrifft den Aufbau von Fahrerkabinen für land- und bauwirtschaftliche Fahrzeuge, insbesondere Ackerschlepper, nach dem Oberbegriff des Anspruchs 1.

Fahrerkabinen für land- und bauwirtschaftliche Fahrzeuge dienen dazu, die Belastung des Fahrers hinsichtlich der Wettereinflüsse sowie der äußeren Geräuschabstrahlung des Schleppers und den damit verbundenen Arbeitsgeräten zu reduzieren. Heute in der Landwirtschaft tätige Schlapperfahrer verbringen bis zu 30 Prozent ihrer gesamten Arbeitszeit auf den Traktor. Daher ist dar Wunsch der Schlepperfahrer nach einem besseren Komfort verständlich, insbesondere was die Senkung des Geräuschniveaus im Innern der Fahrerkabine angeht. Aus diesem Grund sind nahezu alle Hersteller von Ackerschleppern bemüht, weitere Fortschritte auf dem Gebiet der Geräuschreduzierung in der Kabine zu erreichen, was auch werbewirksam nutzbar ist.

Aus dem Fachbuch "Traktoren", Verfasser K.T. Renius, erschienen in der BLV-Verlagsgesellschaft München im Jahr 1985, sind im Kapitel 6.2 Tendenzen zur Kabinenentwicklung namhafter Hersteller aufgezeigt. Im wesentlichen beschränkt sich der Autor dieses Artikels auf die Darstellung und Beschreibung der elastischen Kabinenlagerung, durch die eine Körperschallübertragung von der Geräuschquelle auf das Kabineninnere reduziert werden kann. Diese Maßnahme kombiniert mit einer weiteren, die eine Auskleidung des Kabineninneren mit einem lärmdämmenden Werkstoff vorsieht, ist jedoch nicht ausreichend, um den heutigen Komfortansprüchen zu genügen.

Kabinen entsprechend den Merkmalen des Oberbegriffes von Anspruch 1 sind z.B. bekannt aus US-A-4 055 230 oder NL-A-7 700 276. Die der Erfindung zugrunde liegende Aufgabe besteht darin, einen Kabinenaufbau darzustellen, mit dem eine deutliche Reduzierung des Geräuschpegels am Fahrerohr innerhalb der Kabine erzielbar ist im Vergleich zu bekannten Kabinengestaltungen.

Diese Aufgabe wird mit den im kennzeichnenden Teil des Anspruchs 1 genannten Merkmalen gelöst.

Die Erfindung berücksichtigt eine Vielzahl von Einzelmaßnahmen, um das Geräuschniveau innerhalb der Fahrerkabine deutlich zu verringern. Es ist bereits bekannt, die Betätigungen der außerhalb der Kabine angeordneten Komponenten zu entkoppeln, um damit eine starre, Körperschall übertragende Verbindung zwischen den außerhalb der Kabine angeordneten Bauteil und der innerhalb der Kabine befindlichen Betätigung zu vermeiden, um so eine Körperschallisolierung zu erreichen.

In einer Ausgestaltung der Erfindung ist vorgesehen, die Betätigung durch einen Bowdenzug oder Seilzug durchzuführen bzw. eine elektrohydraulische oder elektromechanische Übertragung vorzusehen, die in jedem Fall eine starre Verbindung vermeidet.

Eine weitere Maßnahme berücksichtigt die Stirnwand, das Kabinenteil unterhalb dar Frontscheibe, das im wesentlichen als Armaturenträger dient und üblicherweise mit einer Vielzahl von Durchtritten versehen ist zur Durchführung von Verbindungs- und Versorgungsleitungen in Form von Kabelbäumen oder Regelgestängen zum Antriebsmotor des Fahrzeugs. Der Stirnwand, durch die die Fahrerkabine von der Hauptgeräuschquelle des Fahrzeugs, dem Motor, abgeschirmt wird, ist gemäß der Erfindung viel Beachtung geschenkt worden, wobei zum einen die Stirnwand als ein Tiefziehteil ausgebildet ist mit der Folge, daß die Stirnwand nicht als ein ebenes Bauteil ausgebildet ist, was zum einen bei gleicher Materialstärke die Eigenstabilität erhöht und damit die Stirnwand vor Eigenresonanzen schützt, was nachteilig den Geräuschpegel in der Fahrerkabine verändern würde.

Weiter konnte bei der erfindungsgemäßen Stirnwand auf nahezu alle Durchtritte im Bereich zwischen dem Motorraum und der Fahrerkabine verzichtet werden, durch die ein Luftschall von der Geräuschquelle, dem Motor, in die Fahrerkabine gelangen könnte. Zu Verstärkung dieses Effekte ist die Stirnwand weiter in Richtung Motor mit einer Dämmatte versehen die bis auf das Kupplungsgehäuse heruntergezogen ist. Diese Maßnahme war möglich durch die bereits zuvor beschriebenen entkoppelten Betätigungen der außerhalb liegenden Komponenten sowie durch eine weitere Maßnahme, die vorsieht, daß die Versorgungs- und Verbindungsleitungen in Form von Kabelbäumen anstelle der kürzesten Verbindung, Verlegung durch die Stirnwand, unterhalb das Kabinenbodens verlegt sind und durch den Boden im Bereich der C-Säule in das Kabineninnere geführt werden.

Erfindungsgemäß ist weiter die Gestaltung der Verglasungen berücksichtigt, wozu ein durch Versuche ermittelter optimierter Krümmungsradius im Hinblick auf ein vorteilhaft häufiges Brechen der im Kabineninneren auftretenden Schallwellen erreicht wird. Aufgrund von ausgewerteten Versuchen hat sich dabei ein Wölbungsradius von vier Metern um eine vertikale Achse bewährt, der sich vorteilhaft für die Frontscheibe eignet.

Exakte Messungen und Untersuchungen im Akustiklabor führten weiter dazu, den Kabinenboden gezielt zu verstärken, um den zum Teil großflächigen aus Stahlblech gebildeten Boden vor ungewollten Schwingungsanregungen zu schützen, die im Resonanzbereich als Schwingungsmembran wirken können und damit den Geräuschpegel unangenehm erhöhen. Die Neuerung sieht dazu vor, in dem zur Stirnwand gerichteten Bodenbereich durch eine Kombination von mehreren Längs- und einer Querstrebe die Bodenfläche schwingungsfest zu verstärken durch eine starre Verbindung der Streben mit dem Boden, die vorteilhaft verschweißt werden. Der hintere Bodenabschnitt ist durch die Auswahl von speziellen Sitzschienen, mit denen der hintere Bodenabschnitt gezielt versteift werden kann, ebenfalls vor Eigenschwingungen geschützt.

Als weiteres Detail zur Verringerung des Geräuschpegels wurde die Verlegung von Druckmittelleitungen innerhalb der Kabine berücksichtigt, z.B. Leitungen für die hydrostatische Lenkung, Aufgrund von Meßergebnissen wurde dabei auf scharfkantige Übergänge und enge Krümmungsradien in den Leitungen verzichtet, da diese ebenfalls nachteilig Einfluß nehmen auf den Geräuschpegel innerhalb der Fahrerbabine.

Ebenso wurde aus Geräuschgründen die Frischluftansaugung für die Kabinenlüftung und Heizung gezielt auf die Fahrzeugseite verlegt mit der geringsten Schallabstrahlung und dabei auf eine vom Schalldämpfer des Motors entfernt liegende Zone.

Zur weiteren Erläuterung der Erfindung wird auf die Zeichnungen verwiesen, die Ausführungsbeispiele darstellen und aus deren Figurenbeschreibung weitere Merkmale zu entnehmen sind,

Es zeigt:
- Fig. 1:: in einer Perspektive die Rahmenanordnung sowie die Gestaltung des Kabinenbodens der erfindungsgemäßen Fahrerkabine,
- Fig. 2:: die Draufsicht der Fahrerkabine ohne Berücksichtigung des Kabinendachs,
- Fig. 3:: die Unteransicht der Fahrerkabine,
- Fig. 4:: als Einzelteilzeichnung die Stirnwand der Fahrerkabine,
- Fig. 5:: in einor Ausschnittzeichnung die Anordnung der Handbremse mit dem Übertragungsglied,
- Fig. 6:: teilweise die Heckansicht der Fahrerkabine sowie die Zapfwellenbetätigung,
- Fig. 7:: die Durchführung der Verbindungsleitungen im hinteren Bereich der Fahrerkabine durch den Kabinenboden.

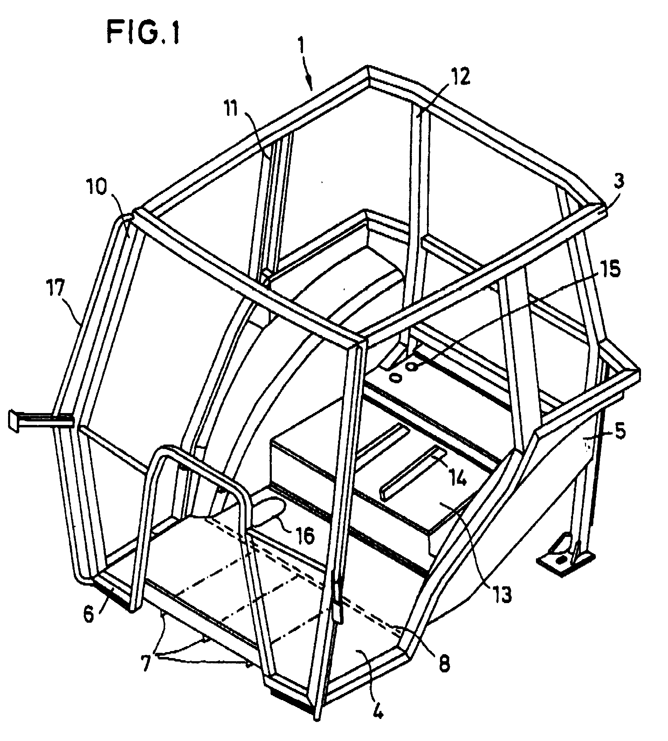

Der Figur 1 ist in einer vereinfachten Darstellung die erfindungsgemäße schallgedämmte Fahrerkabine eines Ackerschleppers entnehmbar, die im wesentlichen den in zwei Abschnitte, den Boden (4) und den Boden (13), aufgeteilten Kabinenboden darstellt mit den Kotflügeln (5) sowie den in Form einer Skelettbauweise dargestellten Kabinenrahmen (3) mit den im wesentlichen in Fahrzeuglängsrichtung hintereinander angeordneten Säulen, der A-Säule (10), B-Säule (11) sowie der C-Säule (12). Zur Einstiegshilfe für den Fahrer besitzt die A-Säule (10) einen Handlauf (17). Als gezielte Versteifüng des Kabinenbodens ist der vordere Boden (4) mit drei aufrecht stehenden Längsstreben (7) versehen, die von der Stirnseite der Kabine (1) bis zu der ebenfalls unterhalb des Bodens (4) angeordneten und in Form eines L-Profils dargestellten Querstrebe geführt ist. Durch die Anordnung der Längsstreben (7) wird der Boden (4) in vier gleich breite Abschnitte aufgeteilt. Die Querstrebe (8) verbindet dagegen beide Längsseiten der Kabine im Bereich des Bodens (4), wobei der Abstand zwischen der Querstrebe (8) und der Stirnwand (6) ca. 5/8 der Länge des gesamten Bodens beträgt. In Fahrtrichtung des Fahrzeugs gesehen findet sich im Boden (4) seitlich in unmittelbarer Nähe des Kotflügels (5) vor dem hinteren Boden (13) ein ovalförmig ausgebildeter Durchtritt (16) zur Durchführung von Übertragungselementen zu den entfernt von der Kabine angeordneten und zu betätigenden Komponenten wie z.B. Handbremsbetätigung, Zapfwellenschaltung, Krafthebersteuerung. Der Boden (13), der in Vergleich zum Boden (4) einen Höhenversatz besitzt, ist mit zwei parallel zueinander angeordneten Sitzschienen (14) versehen, die neben einer Halterung und Führung einer Fahrersitzanordnung weiter eine Versteifung des Bodens (13) bewirken. Im Bereich der C-Säule (12) zeigt die Figur (1) zwei in Vorwärtsfahrtrichtung auf der rechten Seite hintereinander angeordnete Bohrungen (15), durch die Versorgungsleitungen bzw. Übertragungsleitungen in die Kabine (1) geführt werden.

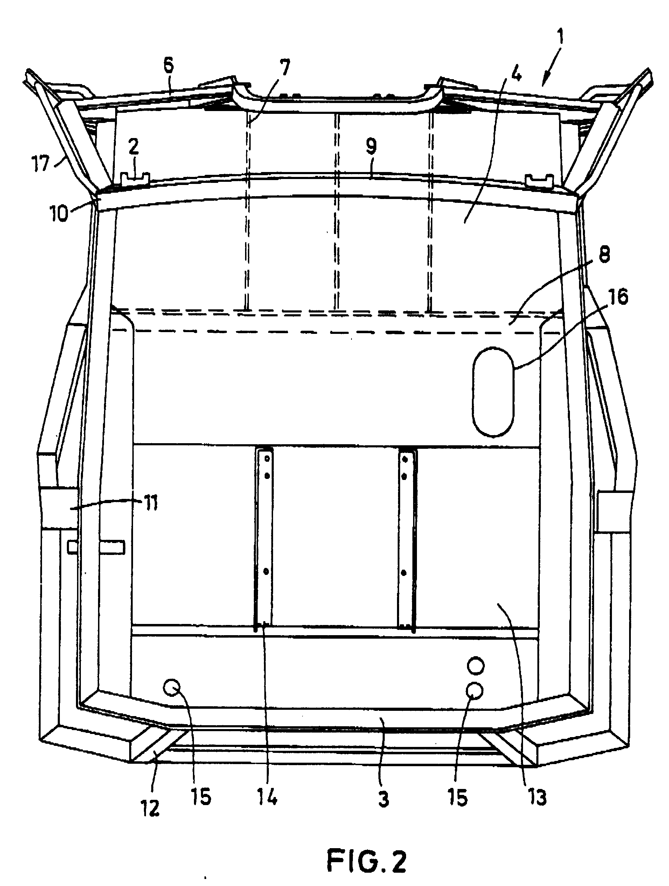

Eine Draufsicht der erfindungsgemäßen Kabine unter Wegfall des Kabinendaches zeigt die Figur 2. Aus dieser Darstellung wird insbesondere die stark in Richtung Stirnseite (6) der Kabine (1) gewölbte Verbindung (9) deutlich, die beide A-Säulen (10) vorbindet, an die die Frontscheibe in den Scharnieren (2) befestigt ist und folglich ebenfalls gewölbt ausgebildet sein muß. Die Figur 2 verdeutlicht weiter die Anordnung dar Sitzschienen (14) sowie die Bohrungen (15) im Boden (13). Weiter ist durch diese Darstellung die sich vom Kabinenboden zum Kabinendach verjüngende Gestaltung des Kabinenrahmens zu entnehmen.

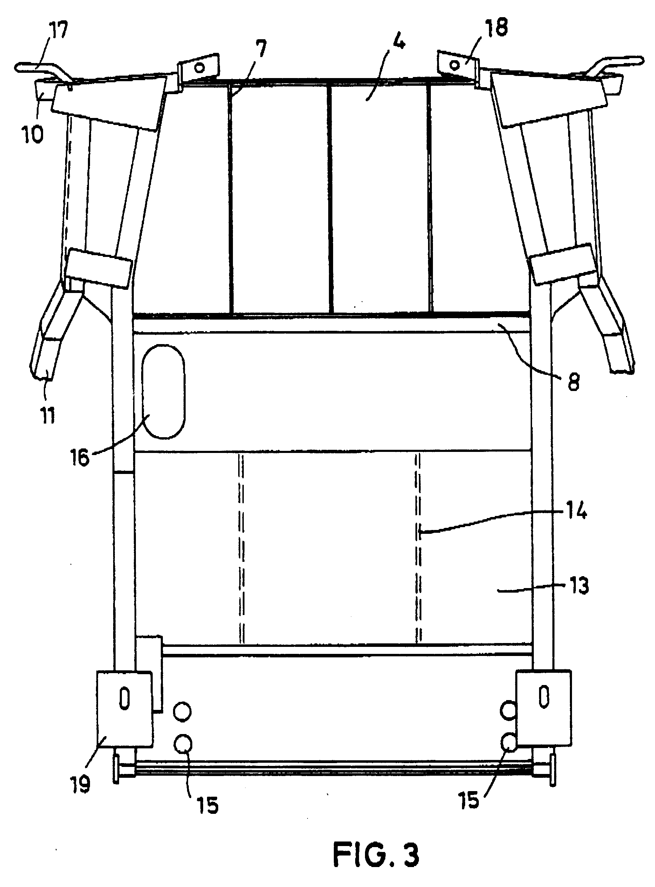

Die Figur 3 zeigt die untere Ansicht des Kabinenbodens, d.h. zu der zum Fahrgestell hin gerichteten Seite. Neben den drei sichtbar dargestellten Längsstreben (7) und der einzelnen Querstrebe (8), die unterhalb des Bodens (4) angeordnet sind, zeigt diese Darstellung weiter die Befestigungen (18, 19), über die eine Halterung der Fahrerkabine am Fahrgestell erfolgt.

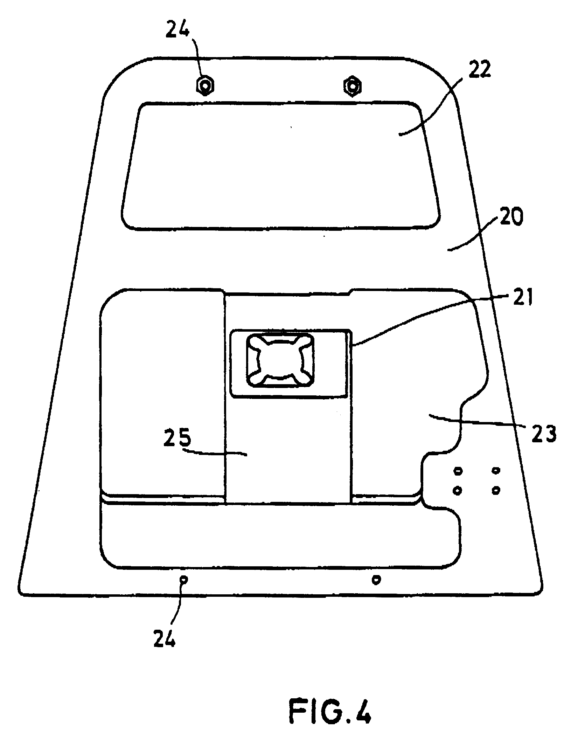

Als Einzelteilzeichnung ist der Figur 4 die Stirnwand (20) zu entnehmen, die als Trennung zwischen der Fahrerkabine (1) und der Antriebseinheit des Fahrzeugs eingesetzt ist. Die in ihrer Grundform als Trapez ausgebildete Stirnwand (20) besitzt unter anderem die Funktion als Instrumententräger für die in der Figur 4 nicht dargestellten Armaturen. Weiter dient die Stirnwand (20) dazu, den vom Motor verursachten Geräuschpegel zu reduzieren und somit eine Reduzierung des Luftschalls zu bewirken. Aus diesem Grund ist die Stirnwand (20) mit nur wenigen Durchtritten versehen, beispielsweise den Befestigungsbohrungen (24), damit möglichst kein Luftschall in das Innere der Fahrerkabine eindringen kann. Die unbedingt erforderlichen Durchtritte, z.B. Verbindungsgestänge für die Motorregelung, werden dagegen mit großem Aufwand luftschallabgedichtet.

Da erfahrungsgemäß die bislang eingesetzten Stirnwände, die als ebene Blechwand ausgebildet waren, beim Fahrzeugbetrieb häufig angeregt wurden und als Membran wirkten, insbesondere im Resonanzbereich, beeinflußte eine so gestaltete Stirnwand das Geräuschniveau oft negativ. Zur gezielten Versteifung der Stirnwand (20) ist diese daher als ein Tiefziehteil ausgebildet, das Bereiche (22, 23) vorsieht, die zur übrigen Stirnwandebene parallel versetzt angeordnet sind.

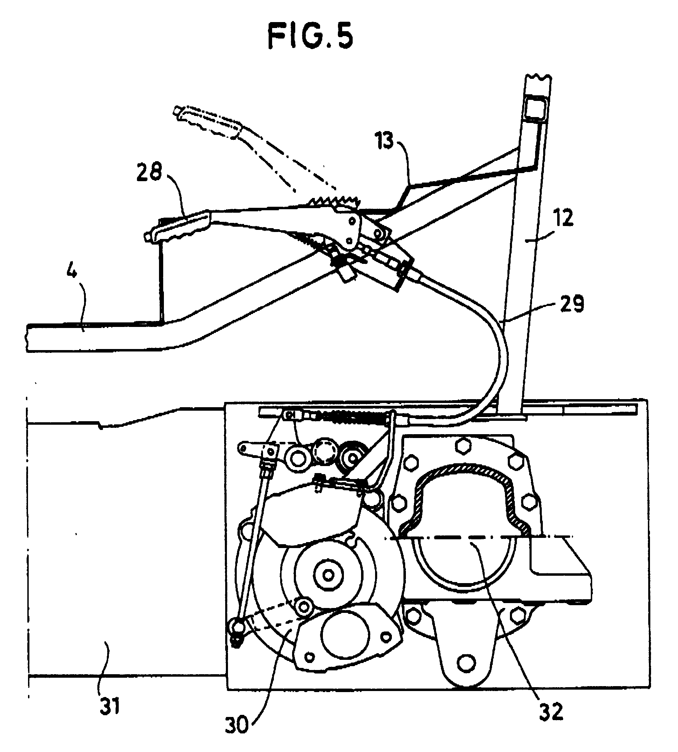

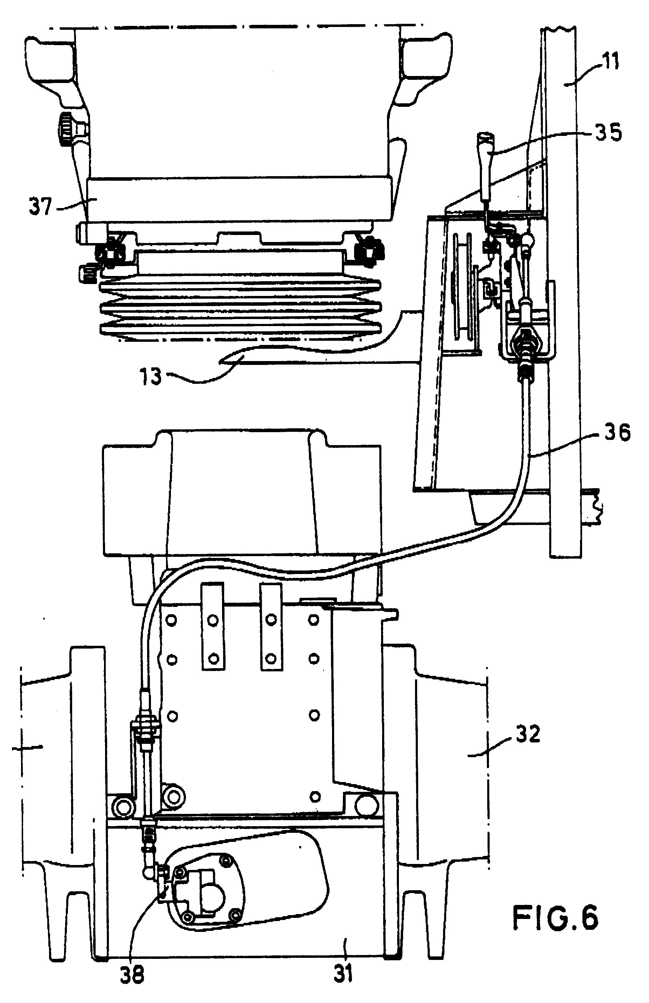

Beispielhaft für die entkoppelte Betätigung von kabinenfern angeordneten Komponenten zeigen die Figuren 5 und 6 Übertragungsglieder in Form von Bowdenzügen (29, 36), durch die eine Betätigung vom Fahrer auf entfernt liegende Bauteile bzw. Einrichtungen erfolgen kann ohne nachteilige Übertragung des Körperschalls. In Figur 5 ist die Handbremsbetätigung dargestellt, wobei der Handbremshebel (28) drehbar in dem Boden (13) der Fahrerkabine gelagert ist und eine Schwenkbewegung des Handbremshebels (28) durch den Bowdenzug (29) auf die Bremse (30) übertragen wird. Die außerhalb des Getriebegehäuses angeordnete Bremse (30), in unmittelbarer Nähe des Hinterachstrichters (32), befindet sich in einer Zone mit einem relativ hohen Schallpegel, der aufgrund einer entkoppelten Übertragung sich nicht auf den Handbremshebel auswirkt. Die Figur 6 zeigt teilweise die Heckansicht auf die Kabine (1), von der im wesentlichen die B-Säule (11) sowie der Boden (13) sichtbar dargestellt sind mit einem in Fahrzeugmitte angeordneten Fahrersitz (37). In Fahrtrichtung des Fahrzeugs auf der rechten Seite ist der Betätigungshebel (35) für die Zopfwellenschaltung vorgesehen; deren Stellbewegung durch den Bowdenzug (36) auf die Zapfwellenkupplung (38) übertragen wird, die sich am hinteren Ende des Getriebegehäuses (31) befindet.

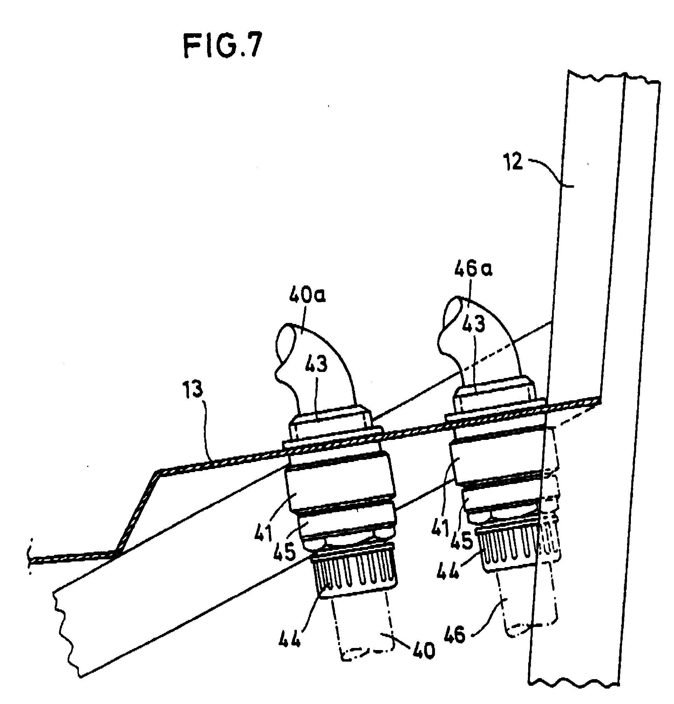

Als einen weiteren Beitrag zur Lösung, die Zahl dar Öffnungen in der Stirnwand zwischen Fahrerkabine und Motor zu verringern, ist als Alternative zu der bislang üblichen Verlagung der Versorgungsleitungen unmittelbar durch die Kabinenwand in Figur 7 eine Lösung dargestellt, bei der ein Kabelbaum (40) vorteilhaft unterhalb des Kabinenbodens verlegt ist und am Heck der Fahrerkabine (1) im Bereich der C-Säule (12) durch den Boden (13) in das Innere der Fahrerkabine geführt wird. Zur Vervollkommnung der Körperachallisolierung tritt der Kabelbaum nicht unmittelbar mit des Boden (13) in Berührung. Eine im Boden (13) befestigte Durchführung (43), beispielsweise in Form einer Kunststoffrohrverschraubung, dient unterhalb des Bodens zur Aufnahme einer Steckkupplung (41), an die sich dar Stecker (45) anschließt, der wiederum mit Hilfe einer Überwurfmutter (44) am Kabelbaum (40) befestigt ist. Der Kabelbaum (40, 46) wird innerhalb der Fahrerkabine nach dem Steckkontakt durch den Kabelbaum (40a, 46a) weitergeführt. Die in Figur 7 dargestellte Kabelbaumführung zeigt somit neben einer gewünschten Körperschallisolierung weiter eins zentrale Trennstelle des Kabelbaums, was beispielsweise beim Entfernen der Fahrerkabine vom Fahrgestell die Montage vereinfacht.

## Patentansprüche

1. Schallgedämmte Kabine für land- und bauwirtschaftliche Fahrzeuge, insbesondere Ackerschlepper, ausgebildet als eins geschlossene, separate Einhalt mit Rundumverglasung, die über eine Lagerstelle mit dem Fahrgestell bzw. mit Rahmenteilen des Traktors verbunden ist, wobei die Kabine einen mehrpfostigen Rahmen aufweist sowie einen Kabinenboden, ein Kabinendach und eine Stirnwand, und die Kabine weiter neben einer Sitz- und Lenkradanordnung Bedienungselemente für die z.T. außerhalb der Kabine angeordneten Fahrzeugkomponenten besitzt, wobei die Betätigung der Komponenten, die außerhalb der Kabine (1) angeordnet sind, durch entkoppelte Übertragungsgestänge erfolgt;
gekennzeichnet durch folgende Merkmale:
a. die Stirnwand (20) ist versteift und isoliert ausgebildet;
b. Versorgungs- und Übertragungsleitungen sind im rückwärtigen Bereich in die Kabine (1) geführt;
c. die Verglasungen sind gewölbt ausgeführt, wobei sich der Wölbungsgrad einer Frontscheibe von dem der übrigen Scheiben unterscheidet;
d. der Kabinenboden (4, 13) ist mit Verstärkungen versehen.

2. Schallgedämmte Kabine nach Anspruch 1,
dadurch gekennzeichnet, daß die Komponentenbetätigung durch einen Bowdenzug (29, 36) oder durch einen Seilzug erfolgt.

3. Schallgedämmte Kabine nach einem der vorhergehenden Ansprüche,
dadurch gekennzeichnet, daß eine hydraulische bzw. elektrohydraulische Übertragung eingesetzt ist zur Stellwegumsetzung eines Verstellhebels auf eine zu betätigende Komponente.

4. Schallgedämmte Kabine nach Anspruch 1,
dadurch gekennzeichnet, daß die Stirnwand (20) als ein Tiefziehteil ausgebildet ist.

5. Schallgedämmte Kabine nach Anspruch 1 oder 5,
dadurch gekennzeichnet, daß ein tiefergezogener Bereich (23) parallel versetzt zur Ebene der übrigen Kontur der Stirnwand (20) verläuft.

6. Schallgedämmte Kabine nach einem oder mehreren der Ansprüche 1, 5 und 6,
dadurch gekennzeichnet, daß die Stirnwand (20) mit Ausnahme kleiner Befestigungsbohrungen (24) keinerlei Durchtritte aufweist.

7. Schallgedämmte Kabine nach Anspruch 1,
dadurch gekennzeichnet, daß die Übertragungs- bzw. Versorgungsleitung als Kabelbaum (40) oder Leitungsstrang durch den Boden (13) in das Innere der Kabine (1) geführt ist.

8. Schallgedämmte Kabine nach einem der Ansprüche 1 oder 8,
dadurch gekennzeichnet, daß mehrere Bohrungen (15) im Heckbereich der Kabine (1) in unmittelbarer Nähe der C-Säule (12) im Boden (13) eingebracht sind.

9. Schallgedämmte Kabine nach Anspruch 1,
dadurch gekennzeichnet, daß die Verglasung der Kabine (1) nahezu vollständig gewölbt ausgebildet ist.

10. Schallgedämmte Kabine nach Anspruch 1 oder 10,
dadurch gekennzeichnet, daß die Frontscheibe einen Wölbungsradius von vier Metern um eine vertikale Achse besitzt.

11. Schallgedämmte Kabine nach Anspruch 1,
dadurch gekennzeichnet, daß der Boden (4) als Verstärkung eine Querstrebe (8) und Längsstreben (7) aufweist, die unterhalb des Bodens (4) angebracht sind.

12. Schallgedämmte Kabine nach Anspruch 1 oder 12,
dadurch gekennzeichnet, daß die Querstrebe (8) als L-Profil ausgebildet ist und ausgehend von der Stirnseite (6) der Kabine (1) auf ca. 6/8 der Länge des Bodens (4) angeordnet ist.

13. Schallgedämmte Kabine nach Anspruch 1 oder 12,
dadurch gekennzeichnet, daß drei Längsstreben (7) vorgesehen sind, die von der Stirnseite (6) der Kabine (1) bis zur Querstrebe (8) reichen, wobei jede Längsstrebe (7) als Flachprofil ausgebildet ist, und die Anordnung der Längsstreben unterhalb des Bodens so erfolgt, daß ausgehend von der Längserstreckung der Querstrebe (8) dieses Maß in vier gleiche Abschnitte aufgeteilt ist.

14. Schallgedämmte Kabine nach Anspruch 1,
dadurch gekennzeichnet, daß zwei in Fahrzeuglängsrichtung oberhalb des Bodens (13) angeordnete Sitzschienen (14) einen Fahrersitz (37) aufnehmen und weiter als Versteifung des Bodens (13) dienen.

## Claims

1. A sound-insulated cabin for agricultural and industrial vehicles, especially farm tractors, in the form of a closed separate unit glazed all round and connected via a bearing or mounting to the chassis or to parts of the tractor frame, the cabin having a multi-upright frame and a floor, roof and end wall, and the cabin also having a seat and steering-wheel arrangement and control elements for components of the vehicle, some of which are situated outside the cabin, the components outside the cabin (1) being actuated by uncoupled transmission linkages, characterised by the following features:
a. The end wall (20) is reinforced and insulated;
b. Supply and transmission lines into the cabin (1) are laid in the rear region;
c. The glazing is convex, the convexity of a front window differing from that of that of the other windows; and
d. The cabin floor (4, 13) is reinforced.

2. A sound-insulated cabin according to claim 1, characterised in that the components are actuated by a Bowden cable (29, 36) or by a cable line.

3. A sound-insulated cabin according to either one of the preceding claims, characterised in that an hydraulic or electro-hydraulic transmission is used for transferring the regulating distance of an adjusting cable to a component which is to be actuated.

4. A sound-insulated cabin according to claim 1, characterised in that the end wall (20) is a deep-drawn part.

5. A sound-insulated cabin according to claim 1 or 5, characterised in that a deep-drawn region (23) extends parallel to and offset from the plane of the remaining contour of the end wall (20).

6. A sound-insulated cabin according to one or more of claims 1, 5 and 6, characterised in that the end wall (20) does not have any passages, apart from small securing bores (24).

7. A sound-insulated cabin according to claim 1, characterised in that the transmission or supply line is in the form of a cable harness (40) or pipe system laid through the floor (13) into the interior of the cabin (1).

8. A sound-insulated cabin according to claim 1 or 8, characterised in that a number of bores (15) in the rear region of the cabin (1) are disposed in the immediate neighbourhood of the C-column (12) in the floor (13).

9. A sound-insulated cabin according to claim 1, characterised in that the glazing of the cabin (1) is nearly all convex.

10. A sound-insulated cabin according to claim 1 or 10, characterised in that the front window has a radius of curvature of 4 metres around a vertical axis.

11. A sound-insulated cabin according to claim 1, characterised in that the floor (4) is reinforced by a transverse strut (8) and longitudinal struts (7) disposed under the floor (4).

12. A sound-insulated cabin according to claim 1 or 12, characterised in that the transverse strut (8) is an L-section member and, starting from the end (6) of the cabin (1), is situated at about 5/8ths of the length of the floor (4).

13. A sound-insulated cabin according to claim 1 or 12, characterised in that three longitudinal struts (7) are provided and extend from the end face (6) of the cabin (1) to the transverse strut (8), each longitudinal strut (7) being a flat section member and the longitudinal struts being disposed along the floor so that they longitudinally divide the transverse strut (8) into four equal portions.

14. A sound-insulated cabin according to claim 1, characterised in that two seat rails (14) disposed above the floor (13) in the longitudinal direction of the vehicle receive a driver's seat (37) and additionally reinforce the floor (13).

## Revendications

1. Cabine à isolation phonique pour véhicules agricoles ou de chantier tels qu'en particulier des tracteurs agricoles, constituée d'une unité séparée vitrée sur toute sa périphérie et reliée au châssis ou à des éléments de la structure du tracteur par une zone d'appui, la cabine comprenant un cadre à plusieurs montants, un plancher, un toit, une paroi frontale, un siège et des organes de direction ainsi que des éléments desservant les composants du véhicule situés à l'extérieur de la cabine, par l'intermédiaire d'éléments de transmission découplés, présentant les caractéristiques suivantes :
a. la paroi frontale (20) est rigidifiée et isolée,
b. les conduites d'alimentation et de transmission passent à la partie arrière de la cabine (1),
c. les vitrages sont bombés, le rayon de courbure du pare-brise étant différent de celui des autres vitrages,
d. le plancher de la cabine (4, 13) est muni de renforts.

2. Cabine à isolation phonique selon la revendication 1, caractérisée en ce que la commande des équipements s'effectue par câble Bowden ou par câble à simple tirage.

3. Cabine à isolation phonique selon l'une des revendications précédentes, caractérisée en ce qu'elle utilise une transmission hydraulique ou hydroélectrique pour commander le levier de manoeuvre d'un équipement.

4. Cabine à isolation phonique selon la revendication 1, caractérisée en ce que la paroi frontale (20) est une pièce à emboutissage profond.

5. Cabine à isolation phonique selon la revendication 1 ou 5, caractérisée en ce que la paroi frontale (20) présente une zone d'emboutissage profond (23) parallèle au plan défini par le contour de la paroi.

6. Cabine à isolation phonique selon l'une ou plusieurs des revendications 1, 5 et 6, caractérisée en ce que la paroi frontale (20), à l'exception de petits trous de fixation (24), ne présente aucune ouverture.

7. Cabine à isolation phonique selon la revendication 1, caractérisée en ce que la conduite d'alimentation ou de transmission est constituée d'un faisceau de câbles (40) ou d'une ligne pénétrant dans la cabine à travers le plancher (13).

8. Cabine à isolation phonique selon l'une des revendications 1 ou 8, caractérisée en ce que divers trous (15) situés à la partie arrière de la cabine sont perçés dans le plancher tout près du montant arrière (12).

9. Cabine à isolation phonique selon la revendication 1, caractérisée en ce que le vitrage de la cabine (1) est à peu près entièrement constitué d'éléments bombés.

10. Cabine à isolation phonique selon la revendication 1 ou 10, caractérisée en ce que le pare-brise présente un rayon de courbure de quatre mètres autour d'un axe vertical.

11. Cabine à isolation phonique selon la revendication 1, caractérisée en ce que le plancher est équipé de renforts longitudinaux (7) et d'un renfort transversal (8), situés sous le plancher.

12. Cabine à isolation phonique selon la revendication 1 ou 12, caractérisée en ce que le renfort transversal (8) est un profilé en L occupant, à partir de la face frontale (5) de la cabine (1), environ les 5/8 de la longueur du plancher (4).

13. Cabine à isolation phonique selon la revendication 1 ou 12, caractérisée en ce qu'elle comporte trois renforts longitudinaux (7) allant de la face frontale (6) de la cabine (1) au renfort transversal (8) et constitués par des profilés plats, la répartition de ces renforts sous le plancher divisant celui-ci en quatre parties égales, à partir du renfort transversal (8).

14. Cabine à isolation phonique selon la revendication 1, caractérisée en ce que le plancher (13) est équipé sur sa face supérieure de deux rails d'assise (14) orientés selon la direction du déplacement du véhicule et recevant le siège du conducteur (37), ces rails servant également à rigidifier le plancher (13).
